# EUROPEAN PATENT SPECIFICATION

(11) **EP 2 755 820 B1**
(45) Date of publication and mention of the grant of the patent: **09.11.2016**
(21) Application number: 12769602.9
(22) Date of filing: 13.09.2012
(51) Int. Cl.: B32B 37/12, G01N 21/64

(54) **METHOD FOR MONITORING THE QUALITY OF AN ADHESIVE APPLICATION**
VERFAHREN ZUR ÜBERWACHUNG DER QUALITÄT EINER KLEBSTOFFAUFTRAGUNG
PROCÉDÉ DE CONTRÔLE DE LA QUALITÉ D'UN PROCÉDÉ D'ENCOLLAGE

(30) Priority: 14.09.2011 EP 11007506
(43) Date of publication of application: 23.07.2014
(73) Proprietor: Amcor Flexibles Italia S.R.L., 36030 Lugo Di Vicenza (VI) (IT)
(72) Inventor: ORSINI, Lorenzo Maria, 54037 Marina di Massa (MS) (IT)
(74) Representative: Gernet, Samuel Andreas
(86) International application number: PCT/EP2012/003846
(87) International publication number: WO 2013/037495

(56) References cited:
- US-A1- 2005 224 156
- US-A1- 2007 039 678
- US-A1- 2010 304 008

## Description

The present invention relates to a method for monitoring the quality of an adhesive application during a lamination process for manufacturing a packaging laminate as described in the preamble of claim 1.

Known films for the production of flexible packaging for food and pharmaceuticals, also packaging intended for undergoing preservation treatment, i.e. heat treatment as retort or pasteurization, are normally laminates with three or four layers, each layer effecting a specific property of the laminate. Layers of such laminates are normally laminated by using an adhesive and an extrusion-lamination process, respectively. A biaxially oriented PET film forming the outer layer is used as a printing support, providing a high-gloss surface and good thermal resistance. Another oriented or unoriented film, e. g. PET or OPA, can be arranged in the middle as a barrier layer support or a layer for improving mechanical properties, such as e.g. impact strength or improved puncture resistance. Frequently, an aluminium foil is used inside the laminate as barrier layer against water vapour, oxygen or aroma loss. A vacuum coated PET or OPA layer can be used as barrier layer in case film transparency would be required. The inner layer generally consists of an unoriented, mono- or coextruded heat sealable film manufactured e.g. in the blow or cast extrusion process. For heat treatment application, PP or PE or a combination of both are frequently used as sealing layers. In the production process via adhesive lamination the individual films are connected to a laminate using solvent-containing or solvent-free two-component adhesives, often in two or more processing steps.

Generally, the dispensing of adhesives onto a moving film or foil web is monitored visually. To facilitate an improved visibility for an operator a stroboscopic lamp is used on the adhesive coating station.

In a lamination process, an adhesive material is generally applied over the whole surface onto a film or foil web. Even if the adhesive material is successfully applied to the film or foil web, it is critical in the manufacture of certain articles to monitor whether or not the applied amount is correct or within an acceptable range. If the amount of adhesive on a film or foil is deficient, the web may not be adequately bonded to a substrate. If the amount of adhesive on a film or foil exceeds a targeted volume, the adhesive application process loses cost effectiveness since more adhesive is being applied than is required to provide an adequate bond.

Although the adhesive material in a laminate for flexible packaging is generally applied over the whole surface onto the moving film or foil web, there might be applications with adhesive material applied in a pattern onto the moving film or foil web.

US 2007/039678 A1 describes a process for producing a layered wood based product using a controlling process for resin dosage, wherein the resin dosage is controlled using collected spectroscopic measurement data from a first and second process stage and a calculated calibration method.

Furthermore, US 2010/0304008 A1 in its discussion on the related art refers to an adhesive detection method in the field of envelope manufacturing.

It is an object of the present invention to provide a simple and cost-efficient method for monitoring the quality of application of an adhesive material onto a moving film or foil web during a lamination process for manufacturing a packaging laminate. The method shall permit a fully automated inspection process.

This object is achieved by a method having the features described in claim 1. Preferred embodiments of the inventive process are described in the claims dependent from claim 1.

The inventive method for monitoring the quality of an adhesive application during a lamination process for manufacturing a packaging laminate comprises first the conveyance of a first film or foil web in a longitudinal direction parallel to the length of the first film or foil. A fluorescent agent capable to absorb ultraviolet light and to emit light in the visible spectrum is added to a commercially available two component adhesive and intermixed with it such that an adhesive material comprising the two component adhesive material and a uniformly distributed fluorescent agent is provided. The thus prepared adhesive material comprising the two component adhesive material and the uniformly distributed fluorescent agent is applied onto the first film or foil web either uniformly over the entire width of the film or foil web, or in a pattern of lines of adhesive material. A second film or foil web is then applied onto the adhesive coated first film or foil web and conveyed to a pressing or lamination station to form a laminate having an at least partially cured adhesive material layer between the first and second film or foil web.

The first film or foil web may consist of unoriented or biaxially oriented PET, or oPA, PP or PE.

The first film or foil web itself may consist of a laminated film or foil web.

The second film or foil web consists preferably of a polymeric material that is transparent to electromagnetic radiation in the ultraviolet and visible spectrum.

In order to monitor the quality of the adhesive deposition a predefined area of the adhesive layer is exposed to ultraviolet radiation. The predefined area is preferably a band running over the entire width of the first film or foil web. The resulting fluorescence radiation in the visible spectrum emitted by the adhesive material exposed to the ultraviolet radiation is detected by a visual inspection system. The visual inspection system is adapted to monitor the quality, as e.g. thickness and homogeneity, of the adhesive material layer.

The inventive method allows an in-line monitoring of the quality of the adhesive deposition during a lamination process. Further, the inventive method allows a quality control of the adhesive application over the entire width of the laminate.

The monitoring of the quality of the adhesive application is done at the end of the lamination process, thus allowing to check all kind of possible defects coming from or occurring during the lamination process.

The detection unit may be a machine vision system including a camera and a controller. The camera is capable of capturing an image of the adhesive material layer. The controller is capable of determining a detected value representative of a characteristic of the pattern from the image, comparing the detected value with a reference value representative of a desired standard for the characteristic, and outputting a signal in accordance with the comparison result.

The detection unit may have a field of view including a reference area in space which encompasses at least a portion of the moving film or foil web after the whole surface or the pattern of the adhesive material is applied onto the moving film or foil web by a coating applicator.

The method preferably comprises providing an alarm to an observer or controller upon receiving the signal, wherein the providing of the alarm preferably includes providing at least one of a visible indication and an audible indication to an observer.

The sensing of radiation may comprise capturing an image of the first film or foil web coated with the adhesive material layer, and the determining of the detected value further comprises processing the captured image.

The processing of the captured image preferably includes determining the volume of adhesive material.

The method comprises radiating the adhesive material with radiation of a first wavelength, and the sensing of radiation preferably comprises detecting fluorescence of a second wavelength different from the first wavelength emitted from the radiated adhesive material, wherein the first wavelength is within the ultraviolet region of the electromagnetic spectrum, and the second wavelength is within the visible region of the electromagnetic spectrum.

The comparing of the detected and reference values preferably comprises sensing changes in the detected value of the characteristic relative to the reference value. The characteristic may be used to determine whether a proper volume of adhesive is being applied.

The sensing of radiation may occur before or after a lamination process. It can e.g. be applied at the end of a lamination process to check all kind of possible defects coming from the lamination process.

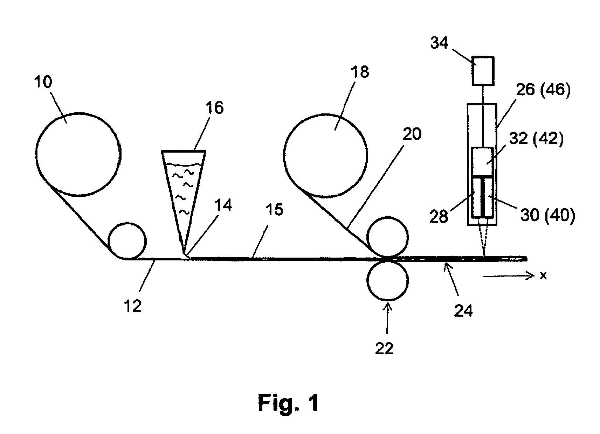

These and other features, objects and advantages of the invention will become more readily apparent to those of ordinary skill in the art upon review of the following detailed description, taken in conjunction with the accompanying drawing which shows in Fig. 1 a schematic view of a production line for the manufacturing of a laminate.

Referring to Fig. 1, in a production line for the manufacturing of a laminate a first film or foil web 12 is unwound from a first coil 10 and is on one side coated with an adhesive material 14 dispensed from a coating applicator 16 which is capable of applying adhesive material 14 as an adhesive material layer 15 over the whole surface, i. e., the entire width, onto the first film or foil web 12 moving in a longitudinal direction x. The term 'adhesive material' hereby means adhesive material comprising the fluorescent agent. A second film or foil web 20, which in the present case is transparent for ultraviolet and visible radiation, is unwound from a second coil 18 and meets the first film or foil web 12 coated with adhesive material layer 15 at a nip roller station 22 thereby forming a laminate 24. A detection unit 26 is positioned at a location downstream of the nip roller station 22. The detection unit 26 includes a source or emitter 28 of ultraviolet radiation and a detector 30 capable of sensing visible radiation.

The emitter 28 projects ultraviolet radiation toward the moving laminate. The adhesive material 14 contains one or more fluorescing agents or substances, such as dyes or inks that emit radiation or fluoresce in the visible region of the electromagnetic spectrum when irradiated by radiation from emitter 28 in the ultraviolet region of the electromagnetic spectrum. The intensity of the fluorescence detected by the detector 30 represents the coverage of adhesive material 14 on the first film or foil web 12 or the thickness of the adhesive material layer 15.

The detection unit 26 further includes a controller 32 defining one or more intensity limits or thresholds relating the intensity of the detected fluorescence and triggering an output error signal if the intensity of the fluorescence falls outside of any of the thresholds. For example, the intensity threshold may be a lower intensity level which, if not exceeded, indicates an under-application of the amount of adhesive material 14. Alternatively, the intensity threshold may be an upper intensity level which, if exceeded, indicates an over-application of the amount of adhesive material 14. The intensity thresholds represent reference values of a desired standard for the intensity of the detected fluorescence. The controller 32 may provide the error signal to an alarm unit 34 for a responsive action. The alarm unit 34 is interfaced with the detection unit 26. The alarm unit 34, in the event of improper or failed application of adhesive material 14 onto the first film or foil web 12, may include a visual indicator or an audible indicator, and/or may provide a signal to stop the production line. The detection unit 26 triggers operation of the alarm unit 34.

The controller 32 compares the detected value of the characteristic with a stored reference value representative of a desired standard for the characteristic. For example, the reference value may be established by analyzing a set of captured images to determine the reference value or may be empirically determined by observation. The comparison may determine the volume of adhesive material. If the comparison indicates that the detected value representative of, for example, the average intensity level is below a threshold, exceeds a limit, or is outside of a range of values, the controller 32 of detection unit 26 transmits an alarm signal to the alarm unit 34.

If the amount of adhesive material 14 on the first film or foil web 12 is outside of tolerance limits, the controller 32 provides an error to the alarm unit 34, which indicates an error condition. The alarm unit 34 can provide an audible or visible alert to an observer, and/or may issue a deactivation signal for stopping the production line.

In a specific embodiment, the detection unit 26 is a machine vision system 46 that incorporates a camera 40, such as a CCD camera, and a controller 42. The controller 42 processes a captured image to determine e.g. a detected value of a characteristic of the laminate 24 such as e.g. an absence of adhesive material on the coated surface of the first film or foil web 12. For example, the controller 42 may calculate an average intensity level of the captured image, or a portion of the captured image, as a characteristic of a pattern.

## Claims

1. A method for monitoring the quality of an adhesive application at the end of a lamination process for manufacturing a packaging laminate, comprising:
conveying a first film or foil web (12) in a longitudinal direction (x);
applying an adhesive material (14) as an adhesive material layer (15) over the whole surface or in a pattern onto the moving first film or foil web (12) and applying a second film or foil web (20) onto the adhesive coated first film or foil web (12) and conveying said first and second film or foil web comprising the intermediate deposited adhesive material layer (15) in the longitudinal direction (x) to a pressing station (22) to form a laminate (24), wherein the second film or foil web (20) is transparent to electromagnetic radiation in the ultraviolet and visible spectrum and in that a fluorescent agent is added to and intermixed with the adhesive material such that an adhesive material comprising a uniformly distributed fluorescent agent is provided before the adhesive material (14) is deposited onto the first film or foil web (12) wherein the fluorescent agent is chosen from those that absorb ultraviolet light and emit light in the visible spectrum, wherein after the lamination process a predefined area of the adhesive coated first film or foil web (12) is exposed to ultraviolet radiation, and wherein the resulting fluorescence radiation emitted by the uv-exposed adhesive material layer (15) is detected by a visual inspection system (26) adapted to monitor the quality and homogeneity of the adhesive material layer (15).

2. The method of claim 1, **characterized in that** a predefined area of the laminate (24) is exposed to ultraviolet radiation, and wherein the resulting fluorescence radiation emitted by the ultraviolet-exposed adhesive material layer (15) is detected by a visual inspection system (26).

3. The method of claim 1 or 2, **characterized in that** the detected fluorescence radiation is compared with a reference value representative for a desired standard of the adhesive material layer (15) and outputting a signal in accordance with the comparison result.

4. The method of one of claims 1 to 3, wherein detecting the fluorescence radiation emitted by the uv-exposed adhesive material layer (15) further comprises capturing a visible image of a predefined area of the adhesive material layer (15) and processing the captured visible image to monitor the quality and homogeneity of the adhesive material layer (15).

5. The method of claim 4, wherein the processing of the captured image includes determining the volume of adhesive material comprised in the predefined area of the visible image or the thickness distribution of the adhesive material layer (15) in that area.

6. The method of one of claims 3 to 5, further comprising providing an alarm to an observer upon receiving the signal.

7. The method of claim 6, wherein providing the alarm includes providing at least one of a visible indication and an audible indication to an observer or controller.

## Patentansprüche

1. Verfahren zum Überwachen der Qualität einer Klebstoffauftragung am Ende eines Laminationsverfahrens für die Herstellung eines Verpackungslaminats, umfassend:
Befördern eines ersten Films oder einer ersten Folienbahn (12) in einer Längsrichtung (x);
Aufbringen eines Klebstoffmaterials (14) als Klebstoffmaterialschicht (15) über die gesamte Oberfläche oder in einer Struktur auf den sich bewegenden Film oder die sich bewegende Folienbahn (12) und Aufbringen eines zweiten Films oder einer zweiten Folienbahn (20) auf den klebstoffbeschichteten ersten Film oder die klebstoffbeschichtete erste Folienbahn (12) und Befördern des/der ersten und zweiten Films oder Folienbahn, der/die die dazwischen aufgebrachte Klebstoffmaterialschicht (15) umfasst, in der Längsrichtung (x) zu einer Pressstation (22), um ein Laminat (24) zu bilden, wobei
der zweite Film oder die zweite Folienbahn (20) für elektromagnetische Strahlung in dem ultravioletten und sichtbaren Spektrum transparent ist und ein fluoreszierendes Mittel zu dem Klebstoffmaterial zugegeben und damit gemischt ist, so dass ein Klebstoffmaterial, das ein gleichmäßig verteiltes fluoreszierendes Mittel umfasst, bereitgestellt ist, bevor das Klebstoffmaterial (14) auf den ersten Film oder die erste Folienbahn (12) aufgebracht wird, wobei das fluoreszierende Mittel ausgewählt ist aus jenen, die ultraviolettes Licht absorbieren und Licht in dem sichtbaren Spektrum emittieren, wobei nach dem Laminierungsvorgang eine vorbestimmte Fläche des/der klebstoffbeschichteten ersten Films oder Folienbahn (12) gegenüber Ultraviolettstrahlung exponiert wird und wobei die erhaltene Fluoreszenzstrahlung, die von der UV-exponierten Klebstoffmaterialschicht (15) emittiert wird, von einem visuellen Untersuchungssystem (26) nachgewiesen wird, das dafür ausgelegt ist, die Qualität und Homogenität der Klebstoffmaterialschicht (15) zu überwachen.

2. Verfahren gemäß Anspruch 1, **dadurch gekennzeichnet, dass** eine vorbestimmte Fläche des Laminats (24) gegenüber Ultraviolettstrahlung exponiert wird, wobei die erhaltene Fluoreszenzstrahlung, die von der Ultraviolettexponierten Klebstoffmaterialschicht (15) emittiert wird, von einem visuellen Untersuchungssystem (26) nachgewiesen wird.

3. Verfahren gemäß Anspruch 1 oder 2, **dadurch gekennzeichnet, dass** die nachgewiesene Fluoreszenzstrahlung mit einem Referenzwert, der für einen gewünschten Standard der Klebstoffmaterialschicht (15) repräsentativ ist, verglichen wird und ein Signal, das dem Vergleichsergebnis entspricht, ausgegeben wird.

4. Verfahren gemäß einem der Ansprüche 1 bis 3, wobei das Nachweisen der Fluoreszenzstrahlung, die von der UV-exponierten Klebstoffmaterialschicht (15) emittiert wird, ferner das Aufnehmen eines sichtbaren Bilds einer vorbestimmten Fläche der Klebstoffmaterialschicht (15) und Verarbeiten des aufgenommenen sichtbaren Bilds zum Überwachen der Qualität und Homogenität der Klebstoffmaterialschicht (15) umfasst.

5. Verfahren gemäß Anspruch 4, wobei das Verarbeiten des aufgenommenen sichtbaren Bilds das Bestimmen des Volumens an Klebstoffmaterial, das in der vorbestimmten Fläche des sichtbaren Bilds enthalten ist, oder der Dickenverteilung der Klebstoffmaterialschicht (15) in dieser Fläche umfasst.

6. Verfahren gemäß einem der Ansprüche 3 bis 5, ferner umfassend das Ausgeben eines Alarms an einen Beobachter bei Empfangen des Signals.

7. Verfahren gemäß Anspruch 6, wobei das Ausgeben des Alarms das Ausgeben von wenigstens einem von einer sichtbaren Anzeige und einer hörbaren Anzeige an einen Beobachter oder Kontrolleur umfasst.

## Revendications

1. Procédé de contrôle de la qualité d'une application d'adhésif à la fin d'un processus de stratification permettant la fabrication d'un stratifié d'emballage, comprenant :
le transport d'une première bande de film ou de feuille (12) dans une direction longitudinale (x) ;
l'application d'un matériau adhésif (14) en tant que couche de matériau adhésif (15) au-dessus de toute la surface ou selon un motif sur la première bande de film ou de feuille (12) mobile et l'application d'une deuxième bande de film ou de feuille (20) sur la première bande de film ou de feuille (12) revêtue d'adhésif et le transport desdites première et deuxième bandes de film ou de feuille comprenant la couche de matériau adhésif (15) déposée intermédiaire dans la direction longitudinale (x) vers une station de pressage (22) pour former un stratifié (24),
la deuxième bande de film ou de feuille (20) étant transparente à un rayonnement électromagnétique dans le spectre ultraviolet et visible et un agent fluorescent étant ajouté au matériau adhésif et mélangé à ce dernier de telle sorte qu'un matériau adhésif comprenant un agent fluorescent distribué uniformément est fourni avant que le matériau adhésif (14) ne soit déposé sur la première bande de film ou de feuille (12), l'agent fluorescent étant choisi parmi ceux qui absorbent la lumière ultraviolette et émettent une lumière dans le spectre visible, une zone prédéfinie d'adhésif de la première bande de film ou de feuille (12) revêtue étant exposée à un rayonnement ultraviolet après le processus de stratification, et le rayonnement de fluorescence résultant émis par la couche de matériau adhésif (15) exposée aux uv étant détecté par un système d'inspection visuelle (26) adapté à contrôler la qualité et l'homogénéité de la couche de matériau adhésif (15).

2. Procédé selon la revendication 1, **caractérisé en ce qu'**une zone prédéfinie du stratifié (24) est exposée à un rayonnement ultraviolet, et le rayonnement de fluorescence résultant émis par la couche de matériau adhésif (15) exposée aux ultraviolets est détecté par un système d'inspection visuelle (26).

3. Procédé selon la revendication 1 ou 2, **caractérisé en ce que** le rayonnement de fluorescence détecté est comparé à une valeur de référence représentative d'un étalon souhaité de la couche de matériau adhésif (15) et un signal est émis en fonction du résultat de comparaison.

4. Procédé selon l'une quelconque des revendications 1 à 3, la détection du rayonnement de fluorescence émis par la couche de matériau adhésif (15) exposée aux uv comprenant en outre la capture d'une image visible d'une zone prédéfinie de la couche de matériau adhésif (15) et le traitement de l'image visible capturée pour contrôler la qualité et l'homogénéité de la couche de matériau adhésif (15).

5. Procédé selon la revendication 4, le traitement de l'image capturée comprenant la détermination du volume de matériau adhésif compris dans la zone prédéfinie de l'image visible ou de la distribution d'épaisseur de la couche de matériau adhésif (15) dans cette zone.

6. Procédé selon l'une quelconque des revendications 3 à 5, comprenant en outre la fourniture d'une alarme à un observateur lors de la réception du signal.

7. Procédé selon la revendication 6, la fourniture de l'alarme comprenant la fourniture d'au moins une indication visuelle et d'une indication sonore à un observateur ou à un contrôleur.
